# EUROPEAN PATENT SPECIFICATION

(11) **EP 2 389 565 B1**
(45) Date of publication and mention of the grant of the patent: **27.01.2016**
(21) Application number: 09752828.5
(22) Date of filing: 17.11.2009
(51) Int. Cl.: G01D 5/245

(54) **ENCODER DEVICE**
CODIEREREINRICHTUNG
DISPOSITIF CODEUR

(30) Priority: 19.12.2008 JP 2008323503
(43) Date of publication of application: 30.11.2011
(73) Proprietor: Dr. Johannes Heidenhain GmbH, 83301 Traunreut (DE)
(72) Inventor: YAMASHITA, Mamoru, Tokyo 204-0003 (JP); HAGA, Hiroshi, Tokyo 181-0015 (JP)
(86) International application number: PCT/EP2009/065295
(87) International publication number: WO 2010/069692

(56) References cited:
- DE-A1-102005 004 668
- JP-A- 2001 309 577

## Description

The present invention relates to the back-up power source of encoder devices which can be attached to the rotor body of a motor or to a body which is displaced linearly. The encoder device detects the number of revolutions and/or the angle of rotation or the displacement location which represents the amount of displacement of the object being measured.

In general encoder devices which require battery back-up have a back-up power source to supply power from an alternative power source when the main power source is interrupted at specific time intervals. Thereby it is possible to prevent the loss of operationally important data of encoders such as the rotational position of the motor or the data showing the mobile location when the main power source is interrupted.

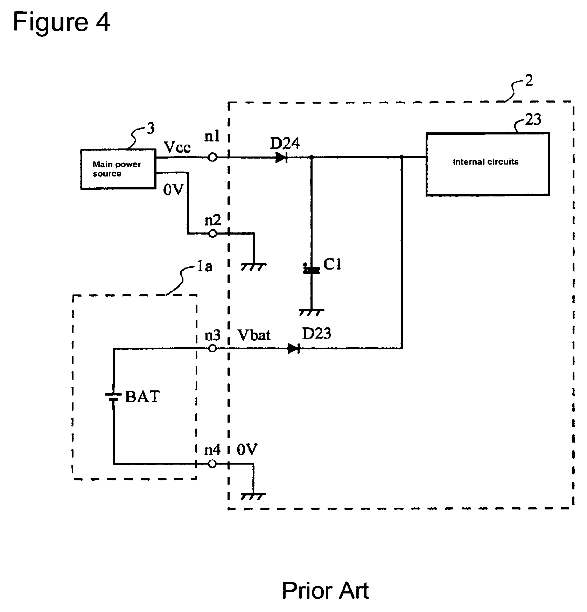

For example, the prior art encoder device shown in Figure 4 has a main power source 3, a back-up power source 1 a (external battery) and a rechargeable high capacitance capacitor C1 in the interior of the encoder base unit 2. Then, when the main power source 3 is interrupted the required power is backed-up by means of the back-up power source 1 a and the high capacitance capacitor C1. In other words, under normal operation main power source voltage Vcc is supplied to the internal encoder circuits 23 from the main power source 3 via nodes n1, n2 and the back-current prevention element D24. When main the power source 3 is interrupted or not available voltage Vbat is supplied to the internal circuits 23 from the interior of the back-up power source 1a via nodes n3 and n4. Due to the back-current prevention element D24 the back-up current does not form a counter current in that situation.

Usually a battery BAT is provided in the interior of the normal back-up power source 1a. This external battery BAT has a limited service life due to deterioration of its characteristics and discharge. When the battery service life expires the battery BAT must be replaced. The process to exchange this battery BAT involves first charging the high capacitance capacitor C1 sufficiently, before switching off the main power source 3 and while allowing the high capacitance capacitor C1 to perform back-up, replacing the external battery BAT within the limit time of back-up capacitance of capacitor C1.

Such encoders are frequently used for position feedback in servo-motors. Because of technical revolution in recent years, downsizing and, on account of the problem of heat development of the motor because of downsizing, high temperature capability is called for in the operating temperature range. However the back-up capacity degrades due to the negative effects of heat on the buffering capacity, giving rise to the problem that the back-up time is reduced. Moreover, an electrical double layer capacitor is mostly used as the high capacitance capacitor for back-up. However, electrical double layer capacitors are generally very large compared to other electronic parts. As result thereof harmful effects on the miniaturization of the encoder and the space required to fit them on the base board are unavoidable.

As regards such back-up power sources, for example in the encoder and the back-up method proposed in Japanese Unexamined Patent Application Publication No. 2000-014047, the capacitor for back-up is installed at a different temperature environment, and at a location distant away from the encoder. Thus the reliability of back-up operations can be improved by preventing the deterioration of the capacitor. Furthermore limitations regarding the shape and dimensional limitations on the encoder itself are removed and the desired miniaturization of the encoder may be achieved.

Since the encoder described in this reference uses a directly connected capacitor for buffering the main power source the capacity of the back-up power source may be insufficient and also the available back-up time may be insufficient. Accordingly this solution is not practicable. Furthermore the power supplied from the main power source and the power supplied from the back-up source cannot be distinguished. As consequence also in the back-up case the current consumption of the encoder may be high, whereby the above-mentioned problems may become worse and a decrease of the service life of the backup current source itself may occur.

In order to resolve these problems, the inventors of the present application proposed in Japanese Unexamined Patent Application Publication No. 2005-221476 an encoder device configuration where the encoder has in addition to a back-up power source for the supply of back-up power in the case of interruption of the main power supply an auxiliary power source on the exterior of the encoder base unit. The auxiliary power source supplies back-up power supply when the main battery is being replaced. Moreover, said back-up power source is configured to supply back-up power only to those circuits of the encoder base unit which require back-up. However, in order to operate the main battery and the auxiliary power source in parallel there are times when the auxiliary battery is somewhat discharged or degraded. This might occur for example when an alarm is generated as a result of voltage monitoring to detect the degradation of the main battery. Because of this, depending on the characteristics of the auxiliary power source, after the main battery is discharged and the voltage decreases the available operating time for auxiliary power source in performing the back-up becomes shorter and the back-up is insufficient to cover the time until the main battery is exchanged. A loss of data might result then. Moreover, the operator must maintain monitoring of the alarm at all times, and there is a problem that in the event that it is unmonitored even for a short time, data might be lost due to the degradation of the back-up power source.

There are devices known suitable for monitoring the voltage of encoder batteries, for example from Japanese Laid Open Unexamined Patent Application Publication No. 2000-041345. However, the device known from this reference is one which performs monitoring of the voltage of only one single battery. No hints are given there how to arrange the monitoring of the voltage of two encoder backup batteries.

Accordingly it is an object of the present invention to provide an encoder device with a long operational period of the back-up power source, thus ensuring low risk of data loss. It should be possible to retain the necessary data in an encoder device without the necessity of having a high capacitance capacitor incorporated inside the encoder device and to enable the exchange of the back-up power source while retaining the circuits required for the operation in an operational state.

This object is accomplished by an encoder device with the features of claim 1.

Further advantageous embodiments of the present invention are characterized in the claims dependent from claim 1.

The inventive encoder device has a base unit for measuring the displacement amount of a member subject to measurement, and a back-up power source as the back-up power source for a main power source to supply power to said encoder base unit. A first battery supplies a first back-up voltage as the regulated voltage in respect of the back-up power source output terminal means. A second battery supplies a second back-up voltage, which is similar or lower to said first back-up voltage when the output voltage of said first battery declines.

The second battery may have a voltage rectifier circuit or a voltage rectifier element to rectify said second back-up voltage.

The second battery may conduct monitoring of said first back-up voltage and may have a voltage rectifier circuit which supplies said second back-up voltage when said first back-up voltage declines.

The first battery and said second battery may be primary cells having the same characteristics.

The difference between the second back-up voltage and the first back-up voltage may be selected from 0.1% to 20% of the nominal voltage of a normal battery

The output voltage of the second battery may be adjusted to a second back-up voltage using a voltage adjustment element or a voltage adjustment circuit.

The voltage adjustment circuit may comprise a switch in order to supply the second back-up voltage when the first back-up voltage declines.

Said switch may be embodied as transistor or FET.

By means of the present invention an encoder device is provided where the data which requires back-up is retained without the need to incorporate a high capacitance capacitor in the interior of the encoder. The invention enables the exchange of the back-up power source while maintaining the circuits required for operation in an operational state. Furthermore a long operational period even in the case of deterioration or degradation of the back-up power source is ensured. The risk of data loss is low even if there are detection errors or if the point in time for exchange is missed.

Moreover, the inventive encoder allows to minimize the current consumption during back-up, thereby lengthening the service life of the back-up power source and reducing the maintenance load.

In this manner, by providing a second battery in addition to the first battery even if the first battery is deteriorated or degraded, the same back-up operations can be performed by the second battery for the same period as the service life of the first battery. Moreover, because the back-up operations are preferably performed at a lower second back-up voltage than the first back-up voltage the degraded state of the first battery can be easily detected. Therefore situations can be avoided where the degradation or deterioration of the first battery is overlooked which would lead to data loss otherwise.

In addition, because the back-up power sources are provided in the exterior of the inventive encoder device the need for fitting a high capacitance capacitor to the interior of the encoder is dispensed with, thus enabling the miniaturization of the encoder. Moreover the problem of the back-up time being lessened due to deterioration of the capacitor in a high temperature environment is resolved and operation in a high temperature environment is possible.

Regarding said first battery and second battery, they may be identical or different, but from the point of view of maintenance and cost it might be advantageous to use the same type with the same characteristics. Moreover, the output voltages may be different but it is preferable that they are the same. As specific types, primary cells such as general use batteries (cells), in other words, manganese batteries, alkaline batteries, lithium batteries, air alkaline batteries and such like are preferable from the point of view of ease of handling, discharge continuity time, stability of the output voltage and such like. Now the lifetime of the cells when primary cells are used, when, for example, current consumption of the battery back-up circuit of the encoder is 100 µA and a 1500 mA/h cell is used, is of the order of 1.5 years. Moreover, secondary cells such as alkaline rechargeable cells, lead rechargeable cells, zinc oxide cells, Ni-Cd cells, nickel-mercury cells, lithium ion secondary cells and such like may also be used. The selection of which of these to use may be decided on consideration of the encoder specification, of the use environment and/or of cost aspects. The battery may be replaced generally when there is a battery voltage monitoring alarm (i.e. alarm sound); alternatively it may be changed during routine maintenance checks.

Moreover, depending on conditions such as the power consumption of the circuits requiring back-up, instead of a battery a super capacitor, in other words, a high capacitance capacitor such as an electrical bilayer capacitor or an aluminium electrolytic capacitor and such like may be used. The respective capacitor will be selected based on consideration of the current consumption of the device, the time required for battery exchange and such like.

In a first embodiment of the present invention, the second back-up voltage is adjusted to be lower than the first back-up voltage. Thus, in the case when the first back-up voltage declines below the second back-up voltage, due to degradation or deterioration of the first battery, the back-up power starts to be supplied from the second battery which has a higher back-up voltage than the first back-up voltage. In other words, by choosing the second back-up voltage to replace the voltage of the first battery which is degraded or deteriorated, the switch-over to the battery of the back-up power source can be realized in a simple configuration. These first and second back-up voltages are the voltages at the output terminals of the back-up power source means which guarantee a voltage value which is the initial one or a standard operating voltage and which is a regulated voltage. Therefore, the first and second back-up voltage is the voltage output from each battery via the later described voltage regulator element or voltage regulator circuit. It naturally changes as each battery becomes degraded or deteriorated over time, and when not otherwise specified, guarantees the fixed voltage value which is the starting voltage or the normal operational voltage and thus represents a regulated voltage.

The difference between the second back-up voltage and the first back-up voltage is determined on considering factors such as discharge characteristics and capacity of the batteries used, the encoder specifications, the maintenance state and the characteristics of the voltage adjustment circuit or voltage adjustment element, and such like. For this reason, it is difficult to regulate the difference between the second back-up voltage and the first back-up voltage to a specific range. Normally this difference is selected from 0.1% to 20%, more preferably between 10% and 15% of the nominal voltage of a normal battery (for example, typically 3.6 V and such like). In particular, if in relation to the discharge characteristics, a battery is selected whose voltage output drops steeply on reaching the end of its service life, the power supply exchange operation from the first battery to the second battery can be performed smoothly.

In order to cause the second back-up battery voltage to be lower than the first back-up battery voltage it is also possible to select for use a second battery which has a lower output voltage than the first battery. However, there is a limit to the types of output voltages available in commercial batteries and the usable range is very limited. Moreover, if a different type of battery is prepared and used this may be a disadvantage in view of costs and maintenance. For this reason the output voltage of the second battery may be adjusted to any second back-up voltage using a voltage adjustment circuit or a voltage adjustment element. Normally, the voltage adjustment element or the voltage adjustment circuit reduces the output voltage of the second back-up battery to the second back-up voltage. By using this type of circuit or element the adjustment to any back-up voltage is enabled. Thus the degrees of freedom in design are increased and the range of batteries to select from is increased which ensures that the costs can be controlled.

The voltage adjustment circuit or voltage adjustment element may use circuits or elements which have conventionally known voltage adjustment functions or voltage reduction functions. Specifically circuits which perform voltage adjustment using semiconductor transistors or FETs and such like, for example, regulator circuits or constant voltage circuits or circuits which transform or respond may be suggested. More specifically:
(1) Circuits which adjust the second back-up voltage to be lower than the first back-up voltage based on directly or via a voltage divider adjusting the output voltage of the second battery;
(2) Circuits which adjust the second back-up voltage to be lower than the first back-up voltage by comparing the second back-up voltage or the output voltage of a voltage divider with a predetermined standard voltage,

And such like may be suggested. As single elements which may be used, for example, two pole or three pole semiconductor elements, specifically diodes, transistors and FETS and such like which utilize forward voltage characteristics may be used. The optimal selection from among any of the above-mentioned elements above may be made on consideration of the characteristics of the battery used, the required specifications and the costs and such like.

In a second embodiment of the present invention the second battery performs monitoring of the first back-up voltage and it has a voltage adjustment circuit in order to supply the second back-up voltage via a switch when the first back-up voltage is reduced. In other words, the switching element of the power supply circuit of the second battery is interrupted to prevent the output of the second back-up voltage while the first back-up voltage is in excess of a predetermined value. Then, when the first back-up voltage is reduced below a predetermined value, the power supply circuit of the second battery is connected by means of a switching element and the second back-up voltage is output. In that instance, because the first back-up voltage is lower than the second back-up voltage, supply of the back-up power is only performed from the second battery. In this embodiment, the second back-up voltage is preferably designed to be equal to or lower than the voltage of the first back-up voltage.

The voltage adjustment circuit of this embodiment may also utilize conventionally known circuits for voltage adjustment or voltage reduction as utilized in the first embodiment described above. Specifically, circuits which perform interruption of connection as described above using switching elements of semiconductors such as transistors or FETs and such like. Alternatively, circuits which perform voltage adjustment using semiconductors in the way described above, for example, regulators or fixed voltage circuits or circuits which transform or responds to the same may be suggested. Specifically:
(1) Circuits which adjust and supply the second back-up voltage based on the standard of the first back-up voltage, by detecting the first output voltage either directly or via a voltage divider;
(2) Circuits which compare the first back-up voltage or the output of a voltage divider and when the first back-up voltage falls below a predetermined value supply the second back-up voltage via switching element and such like;
(3) Circuits which compare the first back-up voltage and the second back-up voltage and when the first back-up voltage falls below the second back-up voltage, the second back-up voltage is supplied via a switching element and such like may be suggested. The optimal selection from among any of the above-mentioned circuits may be made on consideration of the characteristics of the battery used, the required specifications and the costs and such like.

The switching element utilized in this second embodiment may use any element as long as it is an element which enables a switching operation. Other than the three pole type semiconductor elements such as FETs and such like described above, analogue switching semiconductor elements and such like may also be used. Moreover, mechanical style connectors with relays and such like may also be used. When semiconductor type switching elements are used, by utilizing the voltage reduction in the characteristic element ON operation, the output voltage is reduced and an effect similar to the diode type forward voltage reduction as described in the first embodiment above can be obtained.

The first battery and the second battery are each connected, other than by the circuits and elements described above, preferably via a reverse current protection element utilizing semiconductors such as diodes, transistors or FETs and such like to the encoder circuits. Thus it is possible to avoid mutual shorting or interference and the batteries are individually connected in a trouble free way. Moreover, when a secondary cell is used as the battery it may have circuits to enable supply of recharging current from the main power supply.

The reason that the encoder base unit requires circuits for back-up is because there are detection circuits and processing circuits. Those circuits have elements which need back-up to retain data and circuits which must be maintained in an operational state. More specifically there may be memory elements for data, i.e. to store the number of revolutions of absolute encoders, data on displacement amount and data showing the positional displacement of linear encoders, and such like as well as revolutions, rotational direction, or amount of movement and direction of movement. Here, the elements which store the revolution data, data on measurements of the amount of movement are volatile semiconductor memory elements such as RAM and such like, and the detection circuits and processing circuits are configured, and are as far as possible, preferably utilizing elements with low current consumption circuits. Specifically in the case of optical type encoder the detection circuits may comprise light emission means to illuminate an LED by pulse lighting and the detection of the same, pulse generation means for optical detection means and for supplying the timing pulse to the same, or logic circuits for signal processing thereafter. In the case of magnetic type encoders, such circuits may comprise high resistance MR elements. As processing circuits, logic circuits which derive count signals showing the phase difference between two signals by accessing code tables and counters which tally the resultant count may be suggested. Low power consumption elements such as CMOS-IC are preferably used.

These semiconductor elements and circuits may be configured individually in circuits, but by means of the recent advances in integrated circuit technology, they may easily be assembled in one element such as FPGA, PLD or ASIC integrated circuit elements, or in any kind of microprocessor. In particular, if these integrated elements and processors do have low power consumption then their utilization is preferable in view of miniaturization. Even in those situations, the power source supply from the main power source as described above and the power source supply from the back-up power source may be supplied to separate locations where they are required. The back-up power sources described above are normally disposed outside the encoder but, for example, the voltage regulator circuit or voltage regulator element may be disposed within the interior of the encoder and only the back-up battery is disposed in the exterior of the encoder.

These and other features and advantages of the present invention will be appreciated as the same becomes better understood by reference to the following detailed description when considered in connection with the accompanying drawings.
- Figure 1: shows a circuit diagram for an encoder according to a first embodiment of the present invention;
- Figure 2: shows a circuit diagram for an encoder according to a second embodiment of the present invention;
- Figure 3: shows a circuit diagram for an encoder according to a third embodiment of the present invention;
- Figure 4: shows a prior art circuit diagram for the back-up power source of a conventional encoder.

Next different embodiments of the present invention are described in more detail while referring to the drawings.

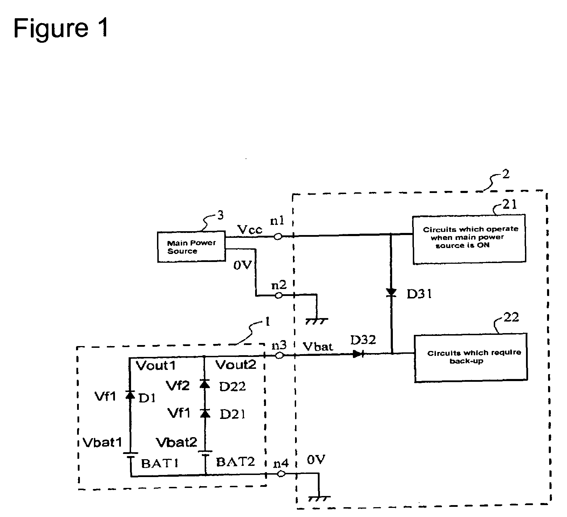

Figure 1 shows a circuit diagram of a first embodiment of the present invention. In the interior of an encoder base unit 2 there is a circuit 21 which operates when the main power source 3 is ON and a circuit 22 which requires back-up. Each of these circuits 21, 22 is configured to have power supplied via different paths. In other words, circuit 21 which operates when the main power source 3 is ON is connected to main power source 3 via nodes n1 and n2. Thus voltage Vcc is supplied from the main power source 3. If the encoder device is embodied as absolute multiturn rotary encoder the circuit 21 which operates when the main power source 3 is ON comprises absolute location detection circuits for detecting the absolute position within one revolution, processing circuits, output circuits and such like. Circuit 22 which requires back-up comprises circuits for the detection of the number of revolutions, processing circuits, data storage circuits and such like.

Circuit 22 which requires back-up is connected to back-up power source 1 by the output terminal nodes n3 and n4 of back-up power source 3 via the back-current prevention element D32. Thus the power source voltage Vbat from the back-up power source 1 is supplied to circuit 22. The back-current prevention element D32 may be dispensed with. Moreover, circuit 22 which requires back-up is also connected to node n1 via a further back-current prevention element D31. Thus when main power source 3 is ON, circuit 22 can receive the voltage Vcc from the main power source 3.

In the back-up power source 1 there is a first battery BAT1 and a second battery BAT2. One terminal of the first battery BAT1 (in the embodiment shown in the figure, the anode) is connected via diode D1, which is the back-current prevention element, to node n3. The other terminal of the first battery BAT1 (in the embodiment shown in the figure, the cathode) is connected to node n4. Moreover, one terminal of the second battery BAT2 (In the embodiment shown in the figure, the anode) is connected via diode D21, which is the back-current prevention element, and diode D22, which is the voltage rectifier element, via a connection in series to node n3. The other terminal (in the embodiment shown in the figure, the cathode) of the second battery BAT2 is connected to node n4.

Here the output voltages of the first battery BAT1 and the second battery BAT2 are the same. If the forward voltage drop Vf1 across back-current prevention element D1 and across back-current prevention element D21 is the same, then the voltage supplied from the second battery BAT2 via the back-current prevention element D21 and the voltage rectifier element D22 is a lower voltage than that supplied from the first battery BAT1 via the back-current prevention element D1 due to the forward voltage drop Vf2 of the voltage rectifier element D22.

Moreover, the first battery BAT1 and the second battery BAT2 form a diode-OR circuit together with the back-current prevention element D1 and the back-current prevention element D21. Thus the first battery BAT1 and the second battery BAT2 enable the prevention of shorting. Furthermore it ensured that there is no problem as long as one of them is connected. There is no need for the second battery BAT2 to be connected during normal operation, as long as it is configured to be connected while the first battery BAT1 is being exchanged.

In this embodiment and the embodiments described hereafter the back-current prevention elements D1, D21, D22 and D32 are embodied as diodes. The present invention however is not limited to this and they can of course be substituted by other semiconductors with the same function such as a transistor or FET and such like. Moreover, each of the nodes n1 - n4 which connects the encoder base unit 2 with external peripherals may also be embodied as other electrical connection means such as terminals or connectors.

Next the operations of the circuits are explained. First during normal operation when Vcc > Vbat, i.e. when the main power source 3 is ON, the voltage Vcc is supplied via node n1 from the main power source 3 to the circuit 21 which operates when the main power source 3 is ON. The same voltage Vcc is caused to be supplied in the same manner via back-current prevention element D31 to the circuit 22 which requires back-up. Then when the main power source 3 is interrupted, the first back-up voltage Vout1 is supplied from the first battery BAT1 as back-up power source 1 via the output terminal n3 and n4 of the back-up power source 1 to the circuit 22 which requires back-up via back-current prevention element D32. At this time, because the second back-up voltage Vout2 of the second battery BAT2 is a lower voltage than the first back-up voltage Vout1, the second back-up voltage Vout2 is not supplied to the circuit 22.

Moreover, there is no supply of power to the operational circuit 21 from the back-up power source 1 when the main power supply is ON due to the back-current prevention element D31. In this manner, when the main power source 3 is interrupted, electrical power is supplied from back-up power source 1 only to the circuit 22 which requires back-up.

Then as operational time passes and the first battery BAT1 is discharged or the element itself degrades the output voltage Vbat1 of the first battery BAT1 decreases and when the first back-up voltage Vout1 becomes lower than the second back-up voltage Vout2 the electrical power is then supplied from second battery BAT2 having the second back-up voltage Vout2. If monitoring of the voltage of the first battery BAT1 is performed at that time, or monitoring of the voltage Vbat of the output terminals of the back-up power source 1, it could be easily determined that the time to change the battery has arrived. Because the discharge of the second battery BAT2 begins very soon, there is sufficient time before the characteristics thereof deteriorate. Thus, even if the replacement of the first battery BAT1 is somewhat delayed the back-up operations can be performed without a problem.

Now when exchanging the battery BAT1 of the back-up power source 1, the main power source 3 is preferably interrupted and connected with the second battery BAT2, the first battery BAT1 is removed. At this time too power is supplied for back-up from the second battery BAT2 instead from the first battery BAT1. Then after the first battery BAT1 is replaced, the second battery BAT2 may be removed and replaced, if required. Then the main power source 3 may be switched on again and the device may be operated.

In this manner, by using the second battery BAT 2, the first battery BAT 1 may be replaced without providing auxiliary power source elements such as capacitors and such like within the encoder base unit 2. In this embodiment the only terminals connecting the encoder base unit 2 to the outside are the four nodes n1 to n4. Therefore there is no need to alter the number of terminals in conventional apparatus to enable the configuration of the present invention which is very economic.

In the first embodiment described above, the back-up power source 1 was disposed outside the encoder. However only the first battery BAT1 and the second battery BAT2 need to be disposed outside the encoder base unit 2. The other circuits and elements, such as the back-current prevention elements D1 and D21 as well as the voltage rectifier element D22 may be disposed in the interior of the encoder base unit 2.

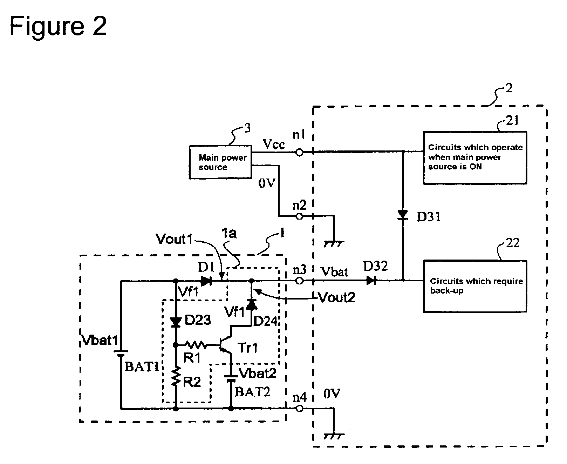

Figure 2 shows the circuit diagram of the second embodiment of the present invention. In this embodiment the first voltage rectifier circuit 1a is connected to the second battery BAT2 in the interior of the back-up power source 1. Again when the first back-up voltage vout1 declines the second back-up voltage Vbat2 is caused to be supplied.

As shown in Figure 2 one terminal of the first battery BAT1 (In the embodiment shown in the figure, the anode) is connected via the back-current prevention element D1 to the back-up power source output terminal node n3. The other terminal of the first battery BAT1 (In the embodiment shown in the figure, the cathode) is connected to back-up power source output terminal node n4. Moreover, diode D23 which is the back-current prevention element and resistor element R2 are connected in series between one terminal and the other terminal of the first battery BAT1. The cathode is on the resistor side of the back-current prevention element D23, and the anode is on the first battery BAT1 side.

One terminal of the second battery BAT2 (In the embodiment shown in the figure, the anode) is connected to one terminal (the emitter) of the non-controlled terminals of transistor Tr1, the other terminal of the second battery BAT2 is connected to node n4. The other terminal of the non-controlled terminals of transistor Tr1 (collector) is connected to node n3 via diode D24 which is the back-current prevention element. The anode is on the transistor side of the back-current prevention element D24, and the node 3 side is the cathode. The control terminal (base) of transistor Tr1, which is a control element, is connected between the diode D23 and the resistor element R2 via resistor element R1. In this embodiment the transistor Tr1 is a bipolar pnp type, but as long as the same operations can be performed any alternative element may also be used in this embodiment. The other configuration elements are the same as in the first embodiment, therefore the same reference numerals are used for the same constitutive elements and the explanations are abbreviated here.

Next the operation of this circuit is explained. When the output voltage of the first battery BAT1 is not reduced the output voltage of the first battery BAT1 is applied to resistor element R2 via diode D23. Because of this, the control terminal (base) of transistor Tr1 is positively biased via resistor element R1, and the switching operation state of transistor Tr1 corresponds to an interrupted state. Therefore the back-up voltage Vbat is supplied as the first back-up voltage Vout1 from the first battery BAT1. Due to the forward voltage drop Vf1 of diode D1 a first back-up voltage Vout1 is output which is lower than the output voltage Vbat1 of the first battery by a difference of Vf1.

Next when the output voltage Vbat1 of the first battery BAT1 declines and becomes lower than the output voltage Vbat2 of the second battery BAT2, the output voltage of the first battery BAT1 is applied to resistor element R2 via diode D23 and becomes lower than the potential of the controlled terminal (base) of transistor Tr1. Because the anode of the second battery BAT2 is connected to one (emitter) of the non-controlled terminals of transistor Tr1 the voltage of the control terminal side (base) of the transistor Tr1 becomes lower than this anode potential. In other words, the output voltage of the second battery BAT2, the apparent bias of the controlled terminal (base) of transistor Tr1, becomes negative. Thus, the switching operation state of transistor Tr1 changes to a conductive state and the output voltage Vbat2 of the second battery BAT2 is caused to be output by the transistor Tr1 via diode D24. In this situation too, the forward voltage drop Vf1 of diode D1 and diode D24 is the same. Due to the saturation voltage Vce (sat) between the collector and emitter of the transistor Tr1, even when batteries with the same characteristics are used, the voltage of the second back-up Battery BAT2 becomes lower than the voltage of the first back-up battery BAT1 by an amount of the saturation voltage Vce of the transistor Tr1 only.

In the first embodiment described above the range of the battery switch-over operational voltage was narrow, because the voltage of the second back-up battery BAT2 was set using the forward voltage drop Vf2 of the diode D22. This causes the problem that the degree of freedom in design is limited. In the second embodiment the operational voltage can be freely set based on diode 23 and resistor element R2. Therefore the degree of freedom in design is increased. However the number of necessary parts is greater than in the first embodiment and the circuit becomes somewhat more complicated. Moreover the voltage setting based on the forward voltage drop Vf2 of the diode D22 according to the first embodiment is easily influenced by temperature variations whereas the second embodiment is more resistant against temperature variation.

Again in the second embodiment as described above the back-up power source 1 is disposed outside the encoder base unit 2. However it is only necessary to dispose the first battery BAT1 and the second battery BAT2 outside the encoder base unit 2. The other circuits and elements, such as the back-current prevention element D1 and the voltage rectifier element 1 a may be disposed in the interior of the encoder base unit 2. The other operations are the same as in Figure 1, and the same numerical symbols are applied to the same constitutive elements and the explanation is abbreviated.

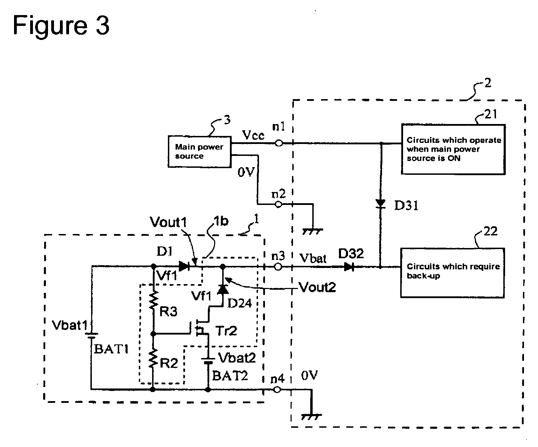

Figure 3 shows the circuit diagram of the third embodiment of the present invention. In this embodiment the second voltage rectifier circuit 1 b is connected to the second battery BAT2 in the back-up power source 1. When the first back-up voltage Vbat1 declines the second back-up voltage Vbat2 is caused to be supplied. This second voltage rectifier circuit 1 b uses a FET as switching element whereas transistor is used as switching element in the second embodiment. This FET, acting as switching element FET:Tr2, corresponds to the pnp type transistor described above and is embodied as a p-channel MOSFET. However as long as the same kind of operation as described can be carried out, any other element can be used alternatively.

In Figure 3 one terminal of the first battery BAT1 (In the embodiment shown in the figure, the anode) is connected to node n3 via back-current prevention element D1. The other terminal (In the embodiment shown in the figure, the cathode) is connected to node n4. Moreover resistor element R3 and resistor element R2 are connected in series between the two terminals of the first battery BAT1. One terminal of the second battery BAT2 (In the embodiment shown in the figure, the anode) is connected to one uncontrolled terminal (source) of switching element FET:Tr2 and the other terminal of the second battery is connected to node n4. The other uncontrolled terminal of switching element FET:Tr2 (drain) is connected to node n3 via diode D24 which is a back-current prevention element. The FET side of back-current prevention element D24 is the anode and the node n3 side becomes the cathode. The controlled terminal (gate) of the switching element FET:Tr2 is connected between the resistor element R3 as described above and the resistor element R2. The other configuration elements are the same as in Figure 2.

Therefore the same configuration elements have the same reference numerals applied and the explanation is abbreviated.

Next, the operation of this circuit is explained. As long as the output voltage Vout1 of the first battery BAT1 is not reduced, the output voltage Vbat1 of the first battery BAT1 is applied to the serial circuit comprising resistor element R3 and resistor element R2. When this divided voltage is applied to the control terminal (gate) of switching element FET:Tr2 the control terminal (gate) of switching element FET:Tr2 is biased positive and the switching operation state of switching element FET:Tr2 is an interrupted state.

Next, when the output voltage Vbat1 of the first battery BAT1 declines, the voltage separated by resistor element R3 and resistor element R2 also declines. Then when the output voltage Vbat1 of the first battery BAT1 declines below the output voltage Vbat2 of the second battery BAT2, the controlled terminal (gate) of switching element FET:Tr2 takes a negative bias. In other words, because the anode of the second battery is connected to one of the uncontrolled terminals (source) of the switching element FET:Tr2 the apparent bias of the controlled terminal (gate) of the switching element FET:Tr2 becomes negative when the voltage of the controlled (gate) side becomes lower than the output voltage of the second battery BAT2. Because of this, the switching operation state of switching element FET:Tr2 changes to a conductive state and the output voltage of the second battery BAT2 is output via switching element FET:Tr2 and diode D24. In this situation too the voltage of the second back-up battery BAT2 is lower than the voltage of the first back-up battery BAT1 in the amount of the voltage drop across the drain-source ON resistance Rds. Even when the characteristics of the first and the second battery BAT1, BAT2 are the same the voltage of the second back-up battery BAT2 is lower than the voltage of the first back-up battery BAT1 in the amount of the Rds voltage drop. The other configuration elements are the same as in Figures 1 and 2 and the same configuration elements have the same reference numerals applied and the explanation is abbreviated.

All embodiments are described above with circuits using diodes, transistors and FETs. However, as already mentioned the present invention is not limited to these circuits and elements and can be realized using circuits and elements other than those described above.

The present invention can be applied to the location detector of any moving part in automated industrial apparatus and moving members such as automobiles and airplanes. In particular, it is an effective technique in absolute rotary encoders, but in other areas too where encoder devices require stand-by operations using back-up during interruption of the main power source. So e.g. the invention can also be applied to linear encoders.

## Claims

1. An encoder device having a base unit for measuring the displacement amount of a member subject to measurement, and a back-up power source (1) as the back-up power source for a main power source (3) to supply power to said encoder base unit, and a first battery (BAT1) which supplies a first back-up voltage (Vout1) as the regulated voltage in respect of the back-up power source (1) output terminal means, and a second battery (BAT2) which supplies a second back-up voltage (Vout2), which is similar or lower than said first back-up voltage (Vout1), when the output voltage (Vbat1) of said first battery (BAT1) declines, characterized that in the case when the first back-up voltage (Vout1) declines below the second back-up voltage (Vout2), the back-up power starts to be supplied from the second battery (BAT2).

2. The encoder device according to claim 1, wherein said second battery (BAT2) has a voltage rectifier circuit or a voltage rectifier element (D22) to rectify said second back-up voltage (Vout2).

3. The encoder device according to claim 1, wherein said second battery (BAT2) conducts monitoring of said first back-up voltage (Vout1) and has a voltage rectifier circuit which supplies said second back-up voltage (Vout2) when said first back-up voltage (Vout1) declines.

4. The encoder device according to any one of claims 1 - 3, wherein said first battery (BAT1) and said second battery (BAT2) are primary cells having the same characteristics.

5. The encoder device according to claim 1, wherein the difference between the second back-up voltage (Vout2) and the first back-up voltage (Vout1) is selected from 0.1% to 20% of the nominal voltage of a normal battery

6. The encoder device according to claim 1, wherein the output voltage of the second battery (BAT2) is adjusted to a second back-up voltage (Vout2) using a voltage adjustment element or a voltage adjustment circuit.

7. The encoder device according to claim 6, wherein said voltage adjustment circuit comprises a switch in order to supply the second back-up voltage (Vout2) when the first back-up voltage (Vout1) declines.

8. The encoder device according to claim 6, wherein said switch is embodied as transistor or FET.

## Patentansprüche

1. Codierervorrichtung, aufweisend eine Basiseinheit zum Messen der Verschiebungsmenge eines Elements, das einer Messung unterzogen wird, und eine Reserveleistungsquelle (1) als Reserveleistungsquelle für eine Hauptleistungsquelle (3) zum Zuführen von Leistung zur Codierer-Basiseinheit und eine erste Batterie (BAT1), welche eine erste Reservespannung (Vout1) als die Regelspannung in Bezug auf Ausgangsanschlussmittel der Reserveleistungsquelle (1) liefert, und eine zweite Batterie (BAT2), welche eine zweite Reservespannung (Vout2) liefert, die ähnlich wie oder niedriger als die erste Reservespannung (Vout1) ist, wenn die Ausgangsspannung (Vbat1) der ersten Batterie (BAT1) abfällt, **dadurch gekennzeichnet, dass**, falls die erste Reservespannung (Vout1) unter die zweite Reservespannung (Vout2) abfällt, die Reserveleistung von der zweiten Batterie (BAT2) geliefert zu werden beginnt.

2. Codierervorrichtung nach Anspruch 1, wobei die zweite Batterie (BAT2) eine Spannungsgleichrichterschaltung oder ein Spannungsgleichrichterelement (D22) zum Gleichrichten der zweiten Reservespannung (Vout2) aufweist.

3. Codierervorrichtung nach Anspruch 1, wobei die zweite Batterie (BAT2) Überwachung der ersten Reservespannung (Vout1) durchführt und eine Spannungsgleichrichterschaltung aufweist, welche die zweite Reservespannung (Vout2) liefert, wenn die erste Reservespannung (Vout1) abfällt.

4. Codierervorrichtung nach einem der Ansprüche 1 bis 3, wobei die erste Batterie (BAT1) und die zweite Batterie (BAT2) Primärzellen mit den gleichen Charakteristiken sind.

5. Codierervorrichtung nach Anspruch 1, wobei die Differenz zwischen der zweiten Reservespannung (Vout2) und der ersten Reservespannung (Vout1) aus 0,1 % bis 20 % der Nennspannung einer normalen Batterie ausgewählt ist.

6. Codierervorrichtung nach Anspruch 1, wobei die Ausgangsspannung der zweiten Batterie (BAT2) unter Verwendung eines Spannungsanpassungselements oder einer Spannungsanpassungsschaltung an eine zweite Reservespannung (Vout2) angepasst wird.

7. Codierervorrichtung nach Anspruch 6, wobei die Spannungsanpassungsschaltung einen Schalter umfasst, um die zweite Reservespannung (Vout2) zu liefern, wenn die erste Reservespannung (Vout1) abfällt.

8. Codierervorrichtung nach Anspruch 6, wobei der Schalter als Transistor oder FET ausgeführt ist.

## Revendications

1. Dispositif codeur comprenant une unité de base servant à mesurer la quantité de déplacement d'un organe soumis à une mesure et une source d'alimentation de secours (1) jouant le rôle de source d'alimentation de secours vis-à-vis d'une source d'alimentation principale (3) destinée à alimenter ladite unité de base du codeur, et une première pile (BAT1) qui fournit une première tension de secours (Vout1) jouant le rôle de tension régulée vis-à-vis des moyens formant bornes de sortie de la source d'alimentation de secours (1), et une deuxième pile (BAT2) qui fournit une deuxième tension de secours (Vout2) similaire ou inférieure à ladite première tension de secours (Vout1), lors d'une baisse de la tension de sortie (Vbat1) de ladite première pile (BAT1), le dispositif codeur étant **caractérisé en ce que**, dans le cas d'une baisse de la première tension de secours (Vout1) en-deçà de la deuxième tension de secours (Vout2), l'alimentation de secours commence à être fournie par la deuxième pile (BAT2).

2. Dispositif codeur selon la revendication 1, dans lequel ladite deuxième pile (BAT2) comprend un circuit redresseur de tension ou un élément redresseur de tension (D22) destiné à redresser ladite deuxième tension de secours (Vout2).

3. Dispositif codeur selon la revendication 1, dans lequel ladite deuxième pile (BAT2) réalise un contrôle de ladite première tension de secours (Vout1) et comprend un circuit redresseur de tension qui fournit ladite deuxième tension de secours (Vout2) lors d'une baisse de ladite première tension de secours (Vout1).

4. Dispositif codeur selon l'une quelconque des revendications 1 à 3, dans lequel ladite première pile (BAT1) et ladite deuxième pile (BAT2) sont des piles primaires présentant les mêmes caractéristiques.

5. Dispositif codeur selon la revendication 1, dans lequel la différence entre la deuxième tension de secours (Vout2) et la première tension de secours (Vout1) est choisie entre 0,1 % et 20 % de la tension nominale d'une pile normale.

6. Dispositif codeur selon la revendication 1, dans lequel la tension de sortie de la deuxième pile (BAT2) est réglée sur une deuxième tension de secours (Vout2) à l'aide d'un élément de réglage de tension ou d'un circuit de réglage de tension.

7. Dispositif codeur selon la revendication 6, dans lequel ledit circuit de réglage de tension comprend un commutateur permettant de fournir la deuxième tension de secours (Vout2) lors d'une baisse de la première tension de secours (Vout1).

8. Dispositif codeur selon la revendication 6, dans lequel ledit commutateur prend la forme d'un transistor ou d'un FET.
